**Europäisches Patentamt**

**European Patent Office**

**Office européen des brevets**

(19)

(11) Veröffentlichungsnummer: **0 182 980**
**B1**

(12) # EUROPÄISCHE PATENTSCHRIFT

(45) Veröffentlichungstag der Patentschrift:
**07.12.88**

(51) Int. Cl.⁴: **B 60 K 15/06**

(21) Anmeldenummer: **85110636.9**

(22) Anmeldetag: **23.08.85**

(54) **Kraftstoffanlage mit Zusatzbehälter.**

(30) Priorität: **14.11.84 DE 3441513**

(43) Veröffentlichungstag der Anmeldung:
**04.06.86 Patentblatt 86/23**

(45) Bekanntmachung des Hinweises auf die Patenterteilung:
**07.12.88 Patentblatt 88/49**

(84) Benannte Vertragsstaaten:
**DE FR GB IT**

(56) Entgegenhaltungen:
**CH-A- 303 866**
**DE-C- 356 663**
**DE-C- 378 341**

(73) Patentinhaber: **Dr.Ing.h.c. F. Porsche
Aktiengesellschaft, Porschestrasse 42,
D-7000 Stuttgart 40 (DE)**

(72) Erfinder: **Bott, Helmuth, Ritterstrasse 2,
D-7530 Pforzheim (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft eine Kraftstoffbehälteranlage für ein von einer Brennkraftmaschine angetriebenes Fahrzeug, die in einem mittels einer Haube verschliessbaren Raum untergebracht ist, wobei die Kraftstoffbehälteranlage einen Hauptbehälter und einen Zusatzbehälter umfasst, die unmittelbar miteinander verbunden sind, wobei der Zusatzbehälter lösbar am Hauptbehälter gehalten ist, wobei der Hauptbehälter und der Zusatzbehälter einander zukehrbare Wandungen aufweisen, zwischen denen eine Durchströmeinrichtung vorgesehen ist.

Eine bekannte Kraftstoffbehälteranlage dieser Art (CH-A-303 866) für ein Kraftfahrzeug umfasst einen Hauptbehälter und einen Zusatzbehälter. Der Hauptbehälter ist fest und der Zusatzbehälter ist beweglich angeordnet; letzterer kann zum Befüllen des Hauptbehälters in eine entsprechende Position bewegt werden. Dieser Ausführung haftet der Nachteil an, dass das Befüllen des Hauptbehälters mit dem Zusatzbehälter aufwendige Handhabungen erfordert, bei denen die Gefahr besteht, dass Kraftstoff verschüttet wird.

Bekannte, von Brennkraftmaschinen angetriebene Fahrzeuge weisen eine Kraftstoffbehälteranlage mit konstantem Fassungsvermögen und unveränderbarem Raumanspruch auf. Dieser Ausführung haftet der Nachteil an, dass bei unterschiedlichen Transportaufgaben des Fahrzeuges, z.B. Stadtverkehr mit grossem Kofferraumbedarf oder Fernverkehr mit entsprechend notwendiger Kraftstoffbevorratung, besagte Kraftstoffbehälteranlage diesen Anforderungen nicht Rechnung zu tragen vermag.

Aufgabe der Erfindung ist es, eine Kraftstoffbehälteranlage für ein Fahrzeug so zu gestalten, dass sie an verschiedene Transportaufgaben mit unterschiedlichen Volumina- und/oder Bauraumanforderungen anpassbar ist.

Diese Aufgabe wird erfindungsgemäss durch die Merkmale des Anspruchs 1 gelöst. Weitere, die Erfindung ausgestaltende Merkmale sind in den Unteransprüchen enthalten.

Die mit der Erfindung hauptsächlich erzielten Vorteile sind darin zu sehen, dass die Kraftstoffbehälteranlage durch einen Hauptbehälter und einen von diesem leicht lösbaren Zusatzbehälter gebildet wird, wodurch einerseits, sofern beide Behälter gekoppelt sind, ein relativ grosses Kraftstoffvolumen, beispielsweise für Fernfahrten, aufnehmbar ist und andererseits bei gelöstem Zusatzbehälter der Raum – hier Kofferraum – zum Unterbringen von Gegenständen – Koffer, Geräte – vergrössert ist.

Die Durchströmeinrichtung mit Stutzen und Dichtungen gewährleistet ein betriebssicheres Füllen und Entleeren der beiden Kraftstoffbehälter. Durch die konvexe Gestaltung der dem Hauptbehälter zugekehrten Wandung des Zusatzbehälters wird erreicht, dass bei niedrigem Stand des Mediums in letzterem, dieses sicher in den Hauptbehälter gelangt.

In der Zeichnung werden Ausführungsbeispiele der Erfindung gezeigt, die nachstehend näher beschrieben sind.

Es zeigt

Fig. 1 eine schematische Teilseitenansicht eines Fahrzeugs mit der erfindungsgemässen Kraftstoffbehälteranlage,

Fig. 2 eine Einzelheit X der Fig. 1 in grösserem Massstab,

Fig. 3 eine Ansicht entsprechend Fig. 2,

Fig. 4 eine Einzelheit Y der Fig. 1 in grösserem Massstab,

Fig. 5 eine Ansicht entsprechend Fig. 1 mit einer weiteren Ausführungsform.

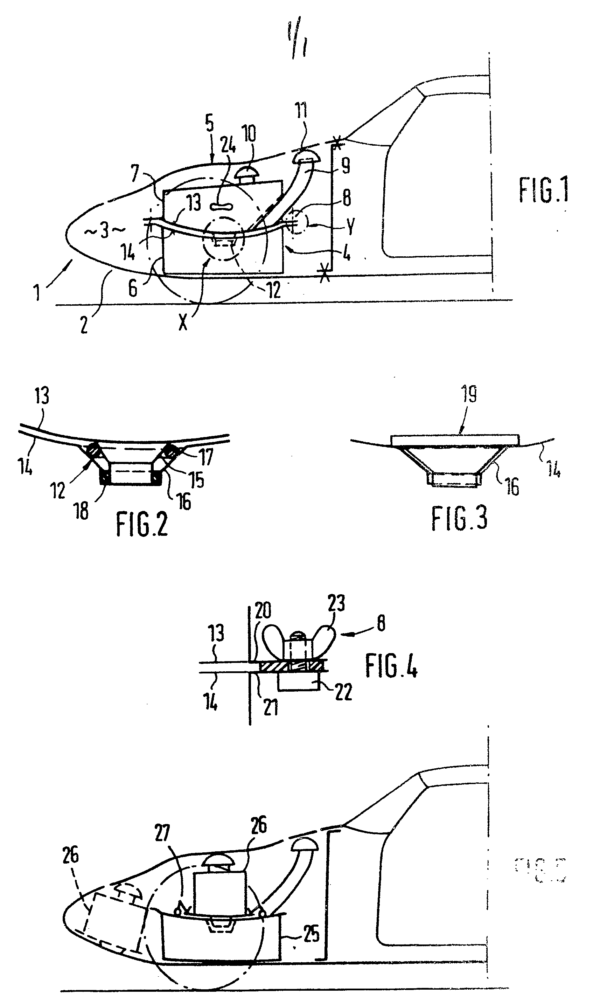

In Fig. 1 ist ein Fahrzeug dargestellt, das einen Aufbau 2 mit einem Bugraum 3 umfasst. Der Bugraum 3 enthält eine Kraftstoffbehälteranlage 4 und ist über eine bewegliche Haube 5 zugänglich. Die Kraftstoffbehälteranlage 4 wird gebildet durch einen Hauptbehälter 6 und einen Zusatzbehälter 7. Der Hauptbehälter 6 ist fest in das Fahrzeug eingesetzt, wogegen der Zusatzbehälter 7 löstbar am Hauptbehälter 6 gehalten ist und zwar unter Vermittlung von Schnellverschlüssen 8 (siehe Fig. 4).

Zur Befüllung der Kraftstoffbehälteranlage 4 sind sowohl am Hauptbehälter 6 als auch am Zusatzbehälter 7 verschliessbare Einfüllvorrichtungen 9 bzw. 10 vorgesehen. Die Einfülleinrichtung 9 ist über eine Klappe 11 im Aufbau 2 bedienbar.

Zwischen Hauptbehälter 6 und Zusatzbehälter 7 ist eine Durchströmeinrichtung 12 vorgesehen, die an einander zugekehrten Wandungen 13, 14 der beiden Behälter vorgesehen ist und durch ineinandergesetzte, konisch verlaufende Stutzen 15 und 16 gebildet wird; Stutzen 15 ist an der Wandung 13 angebracht, Stutzen 16 an der Wandung 14.

Zur Abdichtung im Bereich der Durchströmeinrichtung 12 dienen Dichtkörper 17, 18, die zwischen den Stutzen 15, 16 vorgesehen sind.

Damit das Medium aus dem Zusatzbehälter 7 auch bei niedrigem Kraftstoffstand funktionsgerecht austritt, ist die Wandung 13 des Zusatzbehälters 7 konvex gestaltet; die Wandung 14 ist konkav.

Gemäss Fig. 3 ist der Zusatzbehälter 7 vom Hauptbehälter 8 gelöst und der Stutzen 16 mittels eines Sperrorgans 19 verschlossen. Das Sperrorgan 19 wird unter Spannung am Stutzen 16 gehalten. Es besteht auch die Möglichkeit, ein verschraubbares Sperrorgan einzusetzen.

In Fig. 4 sind die Schnellverschlüsse 8 dargestellt, die mit Flanschen 20, 21 der Behälter zusammenwirken, wobei zwischen den Flanschen 20, 21 eine Dichtung angeordnet ist. Die Schnellverschlüsse 8 weisen einen Gewindebolzen 23 – er durchdringt die Flansche 20, 21 – und eine Flügelmutter 23 auf. Andere Schnellverschlüsse beispielsweise der Exzenterbauart wären hier auch anwendbar.

Soll der Zusatzbehälter 7 vom Hauptbehälter 6 getrennt werden, werden lediglich die Schnellverschlüsse 8 gelöst. Danach kann der Zusatzbehälter mittels an ihm angebrachter Handgriffe 24 aus dem Fahrzeug herausgenommen und an geeigneter Stelle, beispielsweise in der Garage, aufbewahrt werden.

Schliesslich ist in Fig. 5 ein Hauptbehälter 25 und ein Zusatzbehälter 26 – letzterer ist mit Spannverschlüssen 27 gehalten – dargestellt, die hinsichtlich ihrer Grösse und ihres Volumens unterschiedlich sind, d.h. der Zusatzbehälter 26 ist wesentlich kleiner als der Hauptbehälter 25 und kann deshalb, wie im Ausführungsbeispiel dargestellt, vor dem Hauptbehälter 25 im Fahrzeug aufbewahrt werden.

## Patentansprüche

1. Kraftstoffbehälteranlage für ein von einer Brennkraftmaschine angetriebenes Fahrzeug, die in einem mittels einer Haube verschliessbaren Raum untergebracht ist, wobei die Kraftstoffbehälteranlage einen Hauptbehälter und einen Zusatzbehälter umfasst, die unmittelbar miteinander verbindbar sind, wobei der Zusatzbehälter lösbar am Hauptbehälter gehalten ist und wobei der Hauptbehälter und der Zusatzbehälter einander zukehrbare Wandungen aufweisen, zwischen denen eine Durchströmeinrichtung vorgesehen ist, dadurch gekennzeichnet, dass bei eingebautem Zusatzbehälter (7) dieser bei zugeklappter Haube (5) mit einem Hauptbehälter (6) über die Durchströmeinrichtung (12) in Verbindung steht, wobei die beiden Behälter unter Vermittlung von einem oder mehreren Schnellverschlüssen (8) miteinander verbunden sind.

2. Kraftstoffbehälteranlage nach Anspruch 1, dadurch gekennzeichnet, dass die Durchströmeinrichtung (12) durch ineinandergesetzte, konisch verlaufende Stützen (15, 16) gebildet wird.

3. Kraftstoffbehälteranlage nach Anspruch 2, dadurch gekennzeichnet, dass zwischen den Stützen (15, 16) Dichtungen (17, 18) wirksam sind.

4. Kraftstoffbehälteranlage nach den Ansprüchen 2 und 3, dadurch gekennzeichnet, dass der Stutzen (15) des Hauptbehälters (6) bei gelöstem Zusatzbehälter (7) mittels eines Sperrorgans (19) verschliessbar ist.

5. Kraftstoffbehälteranlage nach Anspruch 1, dadurch gekennzeichnet, dass die Wandung (13) des Zusatzbehälters (7) konvex und die Wandung (14) des Hauptbehälters (6) konkav ausgebildet ist.

6. Kraftstoffbehälteranlage nach Anspruch 1, dadurch gekennzeichnet, dass die Schnellverschlüsse (8) mit korrespondierenden Flanschen (20, 21) des Hauptbehälters (6) und des Zusatzbehälters (7) zusammenwirken.

7. Kraftstoffbehälteranlage nach Anspruch 6, dadurch gekennzeichnet, dass die Schnellverschlüsse (8) Flügelmuttern (23) umfassen.

## Revendications

1. Système d'alimentation en carburant avec réservoir supplémentaire pour un véhicule entraîné par un moteur à combustion interne, qui est disposé dans un espace pouvant être fermé par un capot, le système d'alimentation en carburant avec réservoir supplémentaire comprenant un réservoir principal et un réservoir supplémentaire qui peuvent être reliés directement l'un à l'autre, le réservoir supplémentaire étant fixé de façon amovible sur le réservoir principal, et le réservoir principal et le réservoir supplémentaire comprenant des parois tournées l'une vers l'autre, entre lesquelles est prévu un dispositif de mise en communication, caractérisé en ce que lorsque le réservoir supplémentaire (7) est en place, il est mis en liaison avec le réservoir principal (6) par l'intermédiaire d'un dispositif de mise en communication (12) quand le capot (5) est rebattu, les deux réservoirs étant reliés l'un à l'autre par l'intermédiaire d'un ou plusieurs dispositifs de fixation rapide (8).

2. Système d'alimentation en carburant avec réservoir supplémentaire selon la revendication 1, caractérisé en ce que le dispositif de mise en communication (12) est constitué par des tubulures (15, 16) de forme conique et emboîtées l'une dans l'autre.

3. Système d'alimentation en carburant avec réservoir supplémentaire selon la revendication 2, caractérisé en ce que des garnitures d'étanchéité (17, 18) sont disposées entre les tubulures (15, 16).

4. Système d'alimentation en carburant avec réservoir supplémentaire selon les revendications 2 et 3, caractérisé en ce que la tubulure (15) du réservoir principal (6) peut être fermée au moyen d'un élément de fermeture (19) quand le réservoir supplémentaire (2) a été retiré.

5. Système d'alimentation en carburant avec réservoir supplémentaire selon la revendication 1, caractérisé en ce que la paroi (13) du réservoir supplémentaire (7) est de forme convexe et la paroi (14) du réservoir principal (6) est de forme concave.

6. Système d'alimentation en carburant avec réservoir supplémentaire selon la revendication 1, caractérisé en ce que les dispositifs de fixation rapide (8) coopèrent avec des brides correspondantes (20, 21) du réservoir principal (6) et du réservoir supplémentaire (7).

7. Système d'alimentation en carburant avec réservoir supplémentaire selon la revendication 6, caractérisé en ce que les dispositifs de fixation rapide comprennent des écrous à oreilles (23).

## Claims

1. Fuel tank system for a vehicle driven by an internal combustion engine, which system is located in a compartment able to be closed off by means of a hood, the fuel tank system comprising a main tank and a supplementary tank, which can be directly connected to each other, the supplementary tank being held detachably on the main tank and the main tank and the supplementary tank comprising walls which are able to face each other, between which a flow device is provided, characterised in that when the supplementary tank (7) is fitted, it is connected to a main tank (6) by way of the flow device (12) when the hood (5) is closed, whereby the two tanks are connected to each other through the intermediary of one or more quick release closure members (8).

2. Fuel tank system according to Claim 1, characterised in that the flow device (12) is formed by conical connecting pipes (15, 16) placed one in the other.

3. Fuel tank system according to Claim 2, characterised in that seals (17, 18) are effective between the connecting pipes (15, 16).

4. Fuel tank system according to Claims 2 and 3, characterised in that when the supplementary tank (7) is detached, the connecting pipe (17) of the main tank (6) can be closed off by means of a closure (19).

5. Fuel tank system according to Claim 1, characterised in that the wall (13) of the supplementary tank (7) is convex and the wall (14) of the main tank (6) is concave.

6. Fuel tank system according to Claim 1, characterised in that the quick release closure members (8) co-operate with corresponding flanges (20, 21) of the main tank (6) and of the supplementary tank (7).

7. Fuel tank system according to Claim 6, characterised in that the quick release closure members (8) comprise wing nuts (23).

FIG.1

FIG.2

FIG.3

FIG.4